# EUROPÄISCHE PATENTSCHRIFT

(11) **EP 1 945 970 B1**
(45) Veröffentlichungstag und Bekanntmachung des Hinweises auf die Patenterteilung: **07.01.2009**
(21) Anmeldenummer: 06828509.7
(22) Anmeldetag: 04.11.2006
(51) Int. Cl.: F16H 1/28

(54) **PLANETENGETRIEBE**
PLANETARY GEAR
ENGRENAGE PLANETAIRE

(30) Priorität: 12.11.2005 DE 102005054088
(43) Veröffentlichungstag der Anmeldung: 23.07.2008
(73) Patentinhaber: MTU Aero Engines GmbH, 80995 München (DE)
(72) Erfinder: KLINGELS, Hermann, 85221 Dachau (DE)
(86) Internationale Anmeldenummer: PCT/DE2006/001936
(87) Internationale Veröffentlichungsnummer: WO 2007/054066

(56) Entgegenhaltungen:
- WO-A-20/05012761
- DE-A1- 2 235 448
- DE-A1- 2 339 882
- DE-A1- 19 844 843
- US-B1- 6 223 616

## Beschreibung

Die Erfindung betrifft ein Planetengetriebe, insbesondere zur Drehzahlreduktion zwischen der Niederdruch-turbine und dem Fan einer Fluggesturbine, mit einem zentralen Sonnenrad, mit drei oder mehr in einer Radialebene um das Sonnenrad herum angeordneten und mit diesem kämmenden Planetenrädern, mit einem die Planetenräder umschließenden und mit diesen kämmenden Hohlrad sowie mit einem die Planetenräder stützenden Planetenradträger, gemäß dem Oberbegriff des Patentanspruches 1.

Somit handelt es sich vorliegend um die grundlegende, einfachste Bauart eines Planetengetriebes, bei der die miteinander kämmenden Zahnräder in einer gemeinsamen Radialebene angeordnet sind. Der Antrieb soll über das. Sonnenrad erfolgen, wodurch sich für den Abtrieb zwei Möglichkeiten ergeben:
1. Bei drehfest angeordnetem Hohlrad erfolgt der Abtrieb über den Planetenradträger, wodurch die Drehrichtung gleich bleibt, und das Drehzahlverhältnis (Antrieb zu Abtrieb) maximal wird.
2. Bei drehfest angeordnetem Planetenradträger erfolgt der Abtrieb über das Hohlrad, wodurch sich die Drehrichtung umkehrt, und das Drehzahlverhältnis kleiner wird, als bei Bauart 1.
   Anstelle der Bezeichnung "Planetengetriebe" wird in Fachkreisen auch die Bezeichnung "Umlaufrädergetriebe" verwendet, dies aber eher für die Bauart 1 mit feststehendem Hohlrad.

Aus der gattungsgemäßer DE 198 44 843 A1 ist ein spezielles Planetengetriebe mit sogenannten "Stufenplaneten" bekannt. Dabei sind unterschiedlich große Planetenräder paarweise in zwei axial beabstandeten Radialebenen angeordnet, wobei die größeren Planetenräder nur mit dem Sonnenrad, die kleinen Planetenräder nur mit dem Hohlrad kämmen. Die beiden Planetenräder jedes Stufenplaneten sind über eine Welle torsionsfest gekoppelt. Jedes Planetenrad ist axial vorder- und hinterhalb seines Radkörpers in je einem Wälzlager, insbesondere einem Zylinderrollenlager, abgestützt. Dadurch ergibt sich eine hoch belastbare, drehzahlfeste, reibungsarme und steife Lagerung. Diese setzt natürlich einen entsprechend präzisen und stabilen Planetenradträger voraus, um die Tragfähigkeit der Lager und Verzahnungen wirklich ausnutzen zu können.

Die beidseitige Lagerung jedes Planetenrades in je einem Wälzlager ist auch bei "einfachen" Planetengetrieben der eingangs genannten Bauart sinnvoll, wenn hohe Leistungen reibungsarm übertragen werden sollen.

Wälzlager bauen gegenüber Gleitlagern mit vergleichbarer Tragfähigkeit zwar größer bzw. voluminöser, als Vorteile sind aber ihre Reibungsarmut, auch bei geringen Drehzahlen, ihre guten Notlaufeigenschaften bei Mangelschmierung sowie ihre Toleranz gegenüber Verunreinigungen hervorzuheben.

Für eine beidseitige Lagerung der Planetenräder ist es üblich, den Planetenradträger mit zwei axial beabstandeten Lagerscheiben sowie mit die Lagerscheiben verbindenden Stegen auszuführen. Die Stege sitzen in den Lücken zwischen den Planetenrädern, so dass die Anzahl der Stege meist der Anzahl der Planetenräder entspricht. Dabei ist stets das Ziel, die Stege und die Lagerscheiben zu einem möglichst formstabilen "Käfig" zu verbinden. Es ist auch bekannt, die Kraft- bzw. Drehmomenteinleitung und - entnahme am Planetenradträger in dessen axialer Mitte über die Stege durchzuführen, um ungewollte Verformungen bzw. Asymmetrien zu vermeiden.

Trotz all dieser Maßnahmen können Fertigungstoleranzen insbesondere im Bereich der Planetenräder und des Planetenradträgers zu örtlichen Lastspitzen speziell an den Verzahnungen und Lagern führen, welche die übertragbare Leistung bzw. die Lebensdauer des Getriebes reduzieren.

Demgegenüber besteht die Aufgabe der Erfindung darin, ein gattungsgemäßes Planetengetriebe vorzuschlagen, das durch lastausgleichende Maßnahmen eine Erhöhung des Leistungsdurchsatzes und/oder der Lebensdauer ermöglicht.

Diese Aufgabe wird durch die in Anspruch 1 gekennzeichneten Merkmale gelöst, in Verbindung mit den gattungsbildenden Merkmalen in dessen Oberbegriff.

Die vorgesehenen Wälzlager sind erfindungsgemäß als ein- oder mehrreihige Zylinderrollenlager ausgeführt, welche sich durch hohe Belastbarkeit, hohe Drehzahlgrenze, geringe Reibung und kompakte Bauweise auszeichnen. Jedes Planetenrad weist eine biegeelastische, beidseitig über den Radkörper vorstehende Achse auf. Dieses Merkmal wirkt sich lastreduzierend auf die Lagerung und die Verzahnung aus, wobei aber ohne weitere Maßnahmen eine Schiefstellung des Lagerinnenrings relativ zum Lageraußenring und damit ein schädliches Kantentragen der Wälzkörper und Lagerringe die Folge sein könnte. Daher ist die mechanische Verbindung zwischen dem Innenring jedes Wälzlagers und der Achse sphärisch beweglich, d. h. kugelgelenkartig, ausgeführt, so dass die Tragfähigkeit jedes Lagers voll ausgenutzt werden kann.

Vorteilhafte Ausgestaltungen des erfindungsgemäßen Planetengetriebes ergeben sich aus den Unteransprüchen.

Bevorzugt ist der Innenring jedes Wälzlagers mit dem zugeordneten Planetenrad über in Umfangsrichtung wirksame Mitnahmeelemente formschlüssige gekoppelt, wodurch schlupfartige Relativbewegungen zwischen Innenring und Achse bzw. Radkörper vermieden werden. Dabei sind zulässige, elastische, radiale Relativbewegungen zwischen Innenring und Radkörper zu berücksichtigen.

Bevorzugt wird weiterhin, dass die Stege des Planetenradträgers in der Weise mit den Lagerscheiben gekoppelt sind, dass die Lagerscheiben in ihren Radialebenen geringfügig relativ zueinander beweglich sind, insbesondere in Umfangsrichtung gegeneinander verdrehbar. Hier wird bewusst vom Prinzip des "steifen Käfigs" abgewichen, um ggf. durch Fertigungstoleranzen induzierte Lastspitzen im System Lagerung / Verzahnung zu reduzieren.

Zusätzliche, vorteilhafte Merkmale sind in den weiteren Unteransprüchen enthalten.

Die Erfindung wird anschließend anhand der Zeichnungen noch näher erläutert. Dabei zeigen in vereinfachter, nicht maßstäblicher Darstellung:
Figur 1 eine Kombination aus einer Teilansicht eines Planetengetriebes und zwei Teilquerschnitten durch das selbe Planetengetriebe, wobei die Blickrichtung immer gleich ist und axial verläuft,
Figur 2 einen Längsschnitt durch das Planetengetriebe gemäß dem Schnittverlauf A-A in Figur 1, und
Figur 3 eine Ansicht eines Teilbereiches des Planetenradträgers des Planetengetriebes gemäß Blickrichtung E in Figur 2.

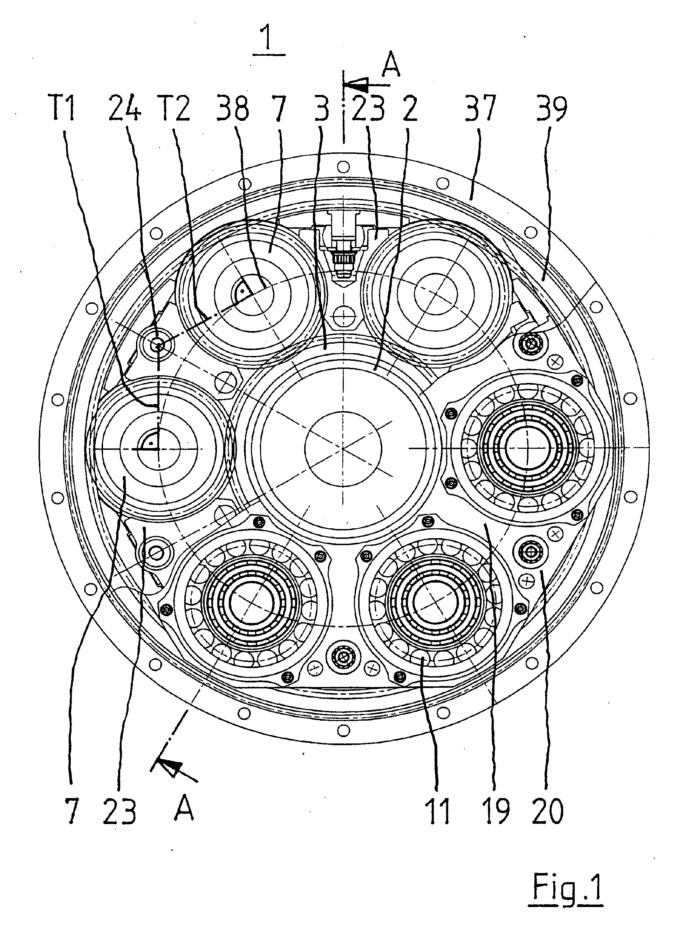

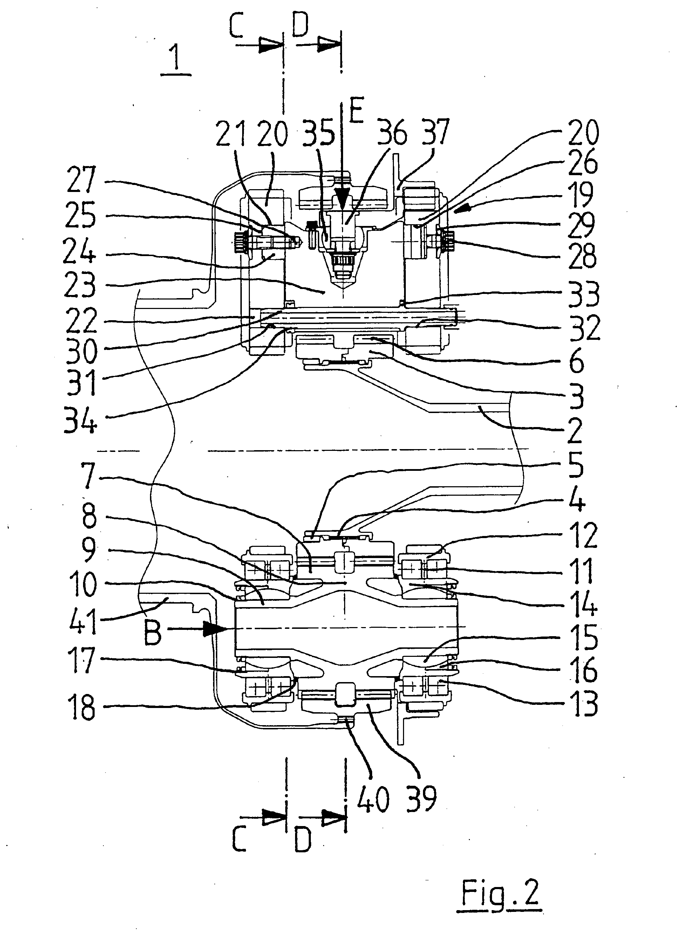

Zum besseren Verständnis sollen zunächst die graphischen Zusammenhänge zwischen Figur 1 und Figur 2 erläutert werden. Figur 1 gliedert sich in drei aneinandergrenzende, kreissektorartige Darstellungsbereiche auf. Der größte Darstellungsbereich bildet etwa einen Halbkreissektor (ca. 180°), der links in der Figur 1 ca. 45° unter der horizontalen Mittellinie beginnt und sich nach unten, nach rechts und nach oben bis ca. 45° über die horizontale Mittellinie erstreckt. Dieser Darstellungsbereich entspricht der Ansicht B in Figur 2 und zeigt primär drei in Umfangsrichtung aufeinanderfolgende Wälzlager 11. Ein weiterer Darstellungsbereich links in Figur 1 bildet etwa einen Viertelkreissektor (ca. 90°) und erstreckt sich von ca. 45° unterhalb bis ca. 45° oberhalb der horizontalen Mittellinie. Dieser Darstellungsbereich entspricht dem Schnittverlauf C-C in Figur 2 und zeigt u. a. ein Planetenrad 7 sowie zwei Stege 23 des Planetenradträgers 19. Der dritte und letzte Darstellungsbereich bildet ebenfalls etwa einen Viertelkreissektor (ca. 90°) und erstreckt sich oben in Figur 1 um ca. 45° beiderseits der vertikalen Mittellinie. Dieser dritte Darstellungsbereich entspricht dem Schnittverlauf D-D in Figur 2 und zeigt u. a. zwei Planetenräder 7 sowie einen Steg 23 mit konstruktiven Details. Über die bereits genannten Bauteile hinaus sind in Figur 1 noch das Sonnenrad 3 mit der dieses antreibenden Welle 2, das mit der - hier nicht sichtbaren - Welle für den Abtrieb gekoppelte Hohlrad 39, eine Lagerscheibe 20 des Planetenradträgers 19, Zapfen 24 an den Stegen 23, der Teilkreis 38 der sechs Planetenräder 7 sowie ein Tragring 37 wiedergegeben. Der Tragring 37 verbindet den Planetenradträger 19 über die Stege 23 torsionsfest mit dem - nicht dargestellten - Gehäuse des Planetengetriebes 1. Die Zapfen 24 an den Stegen 23 bilden die hauptlastübertragenden Elemente zwischen den Stegen 23 und den Lagerscheiben 20. Die Mitten der Zapfen 24 liegen zumindest annähernd im Schnittpunkt zweier Tangenten T1 und T2 an den Teilkreis 38 der Planetenräder 7, wobei die Tangenten T1, T2 jeweils von den Radmitten der Planetenräder 7 ausgehen, welche dem jeweiligen Steg 23 benachbart sind. Berechnungen haben ergeben, dass die resultierenden Kräfte auf die Wälzlager 11 und somit die Lagerscheiben 20 etwa in Richtung besagter Tangenten an den Teilkreis 38 verlaufen.

Figur 2 zeigt - wie bereits angemerkt - einen Längsschnitt durch das Planetengetriebe gemäß dem Schnittverlauf A-A in Figur 1. Der Verlauf A-A. kombiniert zwei axial-radiale Schnittebenen, von denen die obere, vertikale mittig durch einen Steg 23, die untere, geneigte Schnittebene mittig durch ein Planetenrad 7 und die zugehörigen Wälzlager 11 verläuft. Der Leistungsfluss durch das Planetengetriebe 1 erfolgt ausgehend von der Welle 2 (Antrieb) über die Planetenräder 7 auf das Hohlrad 39 und die damit verbundene Welle 41 (Abtrieb). Im dargestellten Beispiel ist der Planetenradträger 19 gehäusefest/statisch gehalten. Im Rahmen der Erfindung wäre es auch möglich, das Hohlrad statisch zu halten und die Abtriebsleistung am Planetenradträger zu entnehmen, d. h. diesen mit der Abtriebwelle zu koppeln. Die zwei Möglichkeiten unterscheiden sich - bei gleichen Zahnradgeometrien - im Drehrichtungs- und Drehzahlverhältnis zwischen An- und Abtrieb. Das vorliegend zweiteilige Sonnenrad 3 ist mit der Welle 2 über eine Verzahnung 4 und eine Verschraubung 5 torsionsfest und axial fixiert verbunden. Die mit den Planetenrädern 7 kämmende Verzahnung 6 des Sonnenrades 3 ist bevorzugt als Doppel-Schrägverzahnung - ähnlich einer Pfeilverzahnung - mit Evolventen-Zahnflanken ausgeführt. Diese Bauart hat, bei präziserer Herstellbarkeit, wie die Pfeilverzahnung den Vorteil, dass die kämmenden Zahnräder sich gegenseitig axial zentrieren. Die Zweiteilung des Sonnenrades 3 ermöglichst ggf. eine noch präzisere Fertigung. Das Hohlrad 39 ist mit der Welle 41 über eine Verzahnung 40 torsionsfest verbunden, wobei bewusst gewisse Relativbewegungen zugelassen werden, wie z. B. axiale Verschiebungen und kleine Kippbewegungen. Je nach Verzahnungsspiel sind auch kleine radiale Relativbewegungen möglich. Jedes Planetenrad 7 umfasst einen Radkörper 8 mit zum Sonnenrad 3 und zum Hohlrad 39 passender Verzahnung und eine biegeelastische, beiderseits über den Radkörper 8 axial vorstehende Achse 9, wobei der Radkörper 8 und die Achse 9 vorzugsweise integral ausgeführt sind. Auf jedem Achsende sitzt ein als ein- oder mehrreihiges Zylinderrollenlager ausgeführtes Wälzlager 11, welches wiederum einen Außenring 12, eine Vielzahl von Wälzkörpern 13 und einen Innenring 14 umfasst. Zwischen der Achse 9 und dem Innenring 14 ist ein Gelenkring 15 mit sphärischer Außenkontur angeordnet. Über einen zusätzlichen Haltering 16 wird der Gelenkring 15 formschlüssig am Innenring 14 gehalten, wobei die komplementären, sphärischen Innenkonturen des Innenrings 14 und des Halterings 16 eine kugelgelenkartige Bewegung des Wälzlagers 11 relativ zum achsfesten Gelenkring 15 und somit zur Achse 9 ermöglichen. Der Gelenkring 15 ist über eine Verschraubung 10 auf der Achse 9 fixiert, der Haltering 16 ist mittels einer Verschraubung 17 am Innenring 14 befestigt. Die Passung im Bereich der sphärischen Gleitflächen ist so gewählt, dass eine spielfreie aber auch zwangskräftefreie Relativbewegung möglich ist. Es sei darauf hingewiesen, dass die zu erwartenden Relativbewegungen sehr klein sind, d. h. die Größe der Schwenkbewegungen wird weit unter einem Winkelgrad liegen. Da sich der Innenring 14 jedes Wälzlagers 11 insbesondere aus Verschleißgründen relativ zur Achse 9 bzw. zum Radkörper 8 nicht in Umfangsrichtung verdrehen soll, sind formschlüssige Mitnahmeelemente 18 am Innenring 14 und am Radkörper 8 angeordnet, z. B. in Form von Stiften und Nuten/Bohrungen oder von Stirnverzahnungen. Die Mitnahmeelemente 18 dürfen die kleinen Schwenkbewegungen des Wälzlagers 11 auf dem achsfesten Gelenkring 15 nicht behindern, was durch entsprechendes Spiel und/oder elastische Verformbarkeit sichergestellt wird. Diese doch relativ aufwändige Wälzlagerbefestigung hat die Aufgabe, ein sogenanntes Kantentragen der Wälzlager 11 zu verhindern. Wie erwähnt, sind die Achsen 9 der Planetenräder 7 aus Gründen des Last- und Toleranzausgleichs biegeelastisch ausgeführt, wobei sich die Auslenkung der Achsenden bei einem konventionellen Lagersitz auf den Lagerinnenring übertragen würde. Die Befestigung der Lageraußenringe am Planetenradträger ist relativ starr, so dass sich - bei konventioneller Lösung - ein Schiefstand des Lagerinnenrings relativ zum Lageraußenring, verbunden mit dem kritischen Kantentragen, ergeben kann. Dies wäre insbesondere bei mehrreihigen Wälzlagern mit breiter Lagerbasis schädlich. Die vorliegende Erfindung ermöglicht es dem Innenring 14 des Wälzlagers 11, sich stets optimal zum Außenring 12 einzustellen, wodurch die Tragfähigkeit und die Lebensdauer optimiert werden. Somit ist der konstruktive Mehraufwand durchaus berechtigt.

Weitere konstruktive Maßnahmen im Sinne eines Last- und Toleranzausgleichs sind in der oberen Hälfte von Figur 2 dargestellt. Der Planetenradträger 19 umfasst als Hauptelemente zwei axial beabstandete, die Wälzlager 11 tragende und im wesentlichen identische Lagerscheiben 20 sowie mindestens drei, im vorliegenden Fall sechs die Lagerscheiben 20 verbindende Stege 23. Die Stege dienen darüber hinaus der Lastübertragung zum Gehäuse oder zur abtriebsseitigen Welle des Planetengetriebes. Wie erwähnt, ist es üblich, den Planetenradträger als möglichst starren "Käfig" auszuführen mit entsprechend steifen Verbindungen zwischen den Stegen und den Lagerscheiben. Somit führen Fertigungsungenauigkeiten im Bereich des Planetenradträgers zu Lasterhöhungen in den Lagern und Verzahnungen, d. h. bei gleicher übertragener Leistung zu mehr Verschleiß bzw. geringerer Lebensdauer. Demgegenüber soll gemäß der vorliegenden Erfindung die Verbindung zwischen jedem Steg 23 und jeder Lagerscheibe 20 in geringem Maß beweglich, genauer gesagt gelenkig ausgeführt sein. Hierzu ist beiderseits am Steg 23 je ein Zapfen 24 integral angeformt, wobei die Zapfen 24 sich koaxial gegenüberstehen. Radial innerhalb und parallel zu den beiden Zapfen 24 führt eine separate Achse 30 durch den Steg 23 und steht beiderseits ebenfalls zapfenartig aus diesem heraus. Die Zapfen 24 sitzen in zylindrischen Senkungen 21, die Achse 30 in zylindrischen Bohrungen 22 der Lagerscheiben 20. Sowohl die Zapfen 24 als auch die Achse 30 weisen am Umfang ballige Kontaktflächen 26, 32 auf, welche in den zylindrischen Senkungen 21 bzw. Bohrungen 22 eine gewisse Schrägstellung zulassen. De facto ergeben sich radiale Schwenkachsen, welche beiderseits des Steges 23 durch die Kontaktflächen 26, 32 und durch die Mitten der Zapfen 24 und der Achse 30 verlaufen. Die Zapfen 24 weisen Gewindebohrungen 27 auf, in denen Schrauben 28 sitzen. Über tellerfederartige Scheiben 29 drücken die Schrauben 28 die Senkungen 21 in den Lagerscheiben 20 axial gegen die Stirnflächen 25 der -Zapfen 24. Die axiale Tiefe der Senkungen 21 ist etwas kleiner als die axiale Länge der Zapfen 24, so dass die Lagerscheiben 20 nicht unmittelbar an den Stegen 23 anliegen sondern einen kleinen axialen Abstand zu diesen einhalten. Dies erleichtert kleine Schwenkbewegungen um die genannten radialen Achsen zwischen den Stegen 23 und den Lagerscheiben 20. Es sei noch erwähnt, dass die Achsen 30 hohl ausgeführt sind und über einen Bund 33 und eine Verschraubung 34 im Steg 23 gehalten sind. Es ist möglich, durch die hohlen Achsen 30 Schmieröl zu leiten. Anstelle der separaten Achsen 30 könnten auch Zapfen nach Art der Position 24 am Steg angeordnet sein, ohne die Kinematik zu verändern. Genau genommen sollten die "virtuellen" Schwenkachsen zwischen den Stegen und Lagerscheiben nicht nur radial und somit parallel verlaufen sondern mit radialer und axialer Komponente zu einem zentralen Punkt auf der Getriebeachse hin konvergieren. Dieser zentrale Punkt würde axial in der Mittelebene der Verzahnungen liegen als Schnittpunkt mit der Getriebeachse. Dann könnten sich die Lagerscheiben kinematisch zwangsfrei nach Art eines Kegelraddifferentials relativ zueinander bewegen. Da im vorliegenden Fall die zu erwartenden Relativbewegungen sehr klein sind, genügt die näherungsweise Lösung mit radialen, parallelen Schwenkachsen, wobei Zwänge elastisch aufgefangen werden. Neben der Aufnahme und Führung der Planetenräder 7 mit ihren Wälzlagern 11 hat der Planetenradträger 19 die Aufgabe, entweder durch eine torsionsfeste Verbindung mit dem Gehäuse des Planetengetriebes 1 eine statische Abstützung für das Differenzdrehmoment zwischen An- und Abtrieb zu bilden oder die Getriebeleistung dynamisch an die abtriebsseitige Welle weiter zu leiten. Im vorliegenden Fall ist beispielhaft die erste Variante dargestellt. Dabei ist axial mittig zwischen den Lagerscheiben an mindestens drei der Stege 23, vorzugsweise an allen Stegen 23, ein Kugelgelenk 35 lösbar befestigt, insbesondere angeschraubt. Wie in Zusammenhang mit Figur 1 erläutert, bilden die Zapfen 24 die Hauptlastübertragungspunkte zwischen den Lagerscheiben 20 und den Stegen 23. Daher ist es für den Kraftfluss günstig, die Mitte des Kugelgelenks 35 etwa koaxial zwischen die gegenüberliegenden Zapfen.24 zu setzen. Mit.jedem Kugelgelenk ist ein Bolzen 36 lösbar verbunden, welcher ein form- und/oder kraftschlüssiges Übertragungselement zu einem Tragring 37 bildet. Der vorzugsweise integrale Tragring 37 weist einen Flansch auf, welcher mit dem Gehäuse des Planetengetriebes lösbar verbunden, vorzugsweise verschraubt ist. Dieser Flansch mit einer Vielzahl von Schraublöchern ist in Figur 1 deutlich zu erkennen.

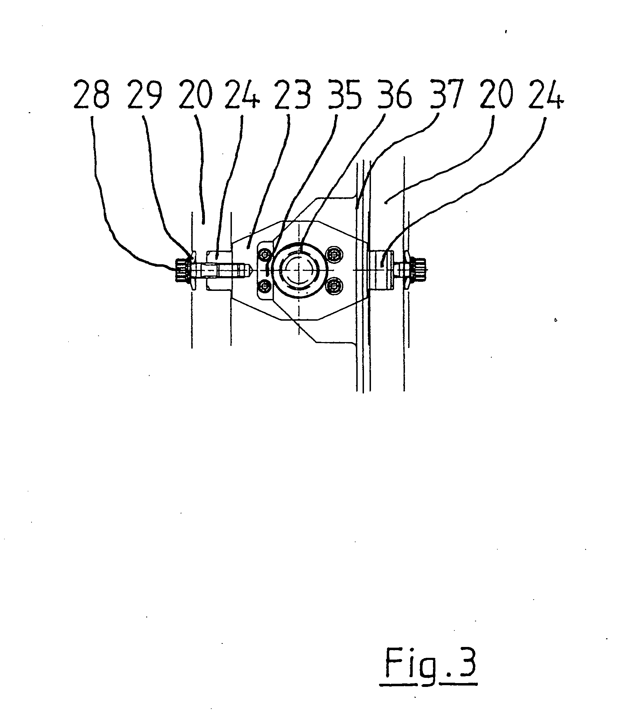

Figur 3 schließlich zeigt die Teilansicht E aus Figur 2 auf einen Steg 23 mit Kugelgelenk 35. Man erkennt die axial beabstandeten Lagerscheiben 20, die hauptlastübertragenden Zapfen 24 einschließlich der Schrauben 28 und Scheiben 29 sowie den Steg 23. Das Kugelgelenk 35 ist hier über vier Schrauben am Steg 23 befestigt, wobei durch eine geeignete Passung zwischen Kugelgelenk 35 und Steg 23 die Schrauben weitgehend entlastet werden können. Weiterhin sind der Bolzen 36 sowie der Tragring 37 angedeutet. Man sieht, dass der Tragring 37 einen den Bolzen 36 umschließenden, laschenartigen Vorsprung aufweist und sich im Übrigen im Bereich der rechten Lagerscheibe umfänglich erstreckt.

## Patentansprüche

1. Planetengetriebe (1), insbesondere zur Drehzahlreduktion zwischen der Niederdruckturbine und dem Fan einer Fluggasturbine, mit einem zentralen Sonnenrad (3), mit drei oder mehr in einer Radialebene um das Sonnenrad (3) herum angeordneten und mit diesem kämmenden Planetenrädern (7), mit einem die Planetenräder (7) umschließenden und mit diesen kämmenden Hohlrad (39) sowie mit einem die Planetenräder (7) stützenden Planetenradträger (19), wobei der Antrieb über das Sonnenrad (3), der Abtrieb bei drehfest angeordnetem Planetentradträger (19) über das Hohlrad (39) oder bei drehfest angeordnetem Hohlrad über den Planetenradträger erfolgt, wobei jedes Planetenrad (7) beidseitig, d. h. axial vorder- und hinterhalb seines Radkörpers (8), in je einem Wälzlager (11) abgestützt ist, und wobei der Planetenradträger (19) zwei axial beabstandete, die Wälzlager (11) tragende Lagerscheiben (20) sowie drei oder mehr, die Lagerscheiben (20) verbindende Stege (23) aufweist, und
jedes Wälzlager (11) als ein- oder mehrreihiges Zylinderrollenlager ausgeführt ist, und jedes Planetenrad (7) eine biegeelastische, beidseitig axial über den Radkörper (8) vorstehende Achse (9) aufweist, **dadurch gekennzeichnet, dass** die Verbindung zwischen dem Innenring (14) jedes Wälzlagers (11) und der jeweiligen Achse (9) sphärisch beweglich, d. h. kugelgelenkartig (14, 15, 16), ausgeführt ist.

2. Planetengetriebe nach Anspruch 1,
**dadurch gekennzeichnet,**
**dass** der Innenring (14) jedes Wälzlagers (11) mit dem Radkörper (8) des zugeordneten Planetenrades (7) über in Umfangsrichtung wirksame Mitnahmeelemente (18), wie z. B. Zähne, Stifte, Nuten und/oder Bohrungen, formschlüssig gekoppelt ist, und dass die Mitnahmeelemente (18) tolerant gegenüber lastinduzierten radialen Relativbewegungen zwischen Innenring (14) und Radkörper (8) ausgeführt sind durch definiertes Radial- und Umfangsspiel und/oder durch elastische Verformbarkeit.

3. Planetengetriebe nach Anspruch oder 2,
**dadurch gekennzeichnet,**
**dass** die die beiden Lagerscheiben (20) des Planetenradträgers (19) verbindenden Stege (23) in der Weise mit den Lagerscheiben (20) gekoppelt sind, dass die Lagerscheiben (20) in ihren Radialebenen geringfügig relativ zueinander beweglich sind, insbesondere in Umfangsrichtung geringfügig gegeneinander verdrehbar sind.

4. Planetengetriebe nach Anspruch 3,
**dadurch gekennzeichnet,**
**dass** die Stege (23) über formschlüssige, kleine Schwenkbewegungen um radiale Achsen zulassende Kraftübertragungselemente sowie über Schraubverbindungen mit den Lagerscheiben (20) lösbar gekoppelt sind.

5. Planetengetriebe nach Anspruch 4,
**dadurch gekennzeichnet,**
**dass** die Kraftübertragungselemente je zwei integrale, koaxiale Zapfen (24) und eine separate Achse (30) an jedem Steg (23) sowie Senkungen (21) und Bohrungen (22) an den Lagerscheiben (20) umfassen.

6. Planetengetriebe nach Anspruch 5,
**dadurch gekennzeichnet,**
**dass** die Zapfen (24) und die Achse (30) ballige Kontaktflächen (26, 31, 32) aufweisen, dass jeder Zapfen (24) ein Teil der Schraubverbindung bildet, und dass die Achse (30) hohl ausgeführt ist.

7. Planetengetriebe nach Anspruch 6,
**dadurch gekennzeichnet,**
**dass** jede Schraubverbindung eine Schraube (28), eine Gewindebohrung (27) in einem Zapfen (24) eines Steges (23) sowie eine tellerfederartige, axial elastisch verformbare Scheibe (29) aufweist.

8. Planetengetriebe nach einem der Ansprüche 5 bis 7,
**dadurch gekennzeichnet,**
**dass** die Zapfen (24) die Hauptkraftübertragungselemente zwischen den Lagerscheiben (20) und den Stegen (23) bilden und - bei axialer Blickrichtung auf den Planetenradträger (19) - mit ihren Mittelpunkten jeweils etwa im Schnittpunkt zweier Tangenten (T1, T2) an den Teilkreis (38) der Planetenradmittelpunkte liegen, wobei die Tangenten (T1, T2) jeweils von den Mittelpunkten zweier benachbarter Planetenräder (7) ausgehen.

9. Planetenradgetriebe nach einem der Ansprüche 1 bis 8,
**dadurch gekennzeichnet,**
**dass** für die gehäuseseitige Drehmomentabstützung oder für die abtriebsseitige Leistungsentnahme am Planetenradträger (19) in einer axial mittig zwischen den Lagerscheiben (20) befindlichen Ebene an mindestens drei, vorzugsweise an allen Stegen (23) Kraftübertragungselemente angeordnet sind.

10. Planetengetriebe nach Anspruch 9,
**dadurch gekennzeichnet,**
**dass** die Kraftübertragungselemente mit den Stegen (23) verschraubte Kugelgelenke (35) umfassen, deren Mittelpunkte etwa auf den Längsmittelachsen der paarweise koaxial gegenüberliegenden Zapfen (24) liegen.

## Claims

1. Planetary gear (1), in particular for reducing the speed between the low pressure turbine and the fan of an aircraft gas turbine, having a central sun gear (3), three or more planet gears (7) positioned in a radial plane around the sun gear (3) which mesh with said sun gear (3), a ring gear (39) which surrounds and meshes with said planet gears (7) and a planet carrier (19) which supports the planet gears (7), the input rotation being provided by the sun gear (3) and the output rotation being provided by the ring gear (39) when the planet carrier (19) is fixed and by the planet carrier (19) when the ring gear (39) is fixed, each planet gear (7) being supported on either side, i.e. axially before and after its gear body (8), in a rolling bearing (11) and the planet carrier (19) having two bearing discs (20) which support the rolling bearing (11) and three or more struts (23) which connect the bearing discs (20), each rolling bearing (11) being designed as a single- or multi-row cylinder roller bearing and each planet gear (7) having a flectionally elastic shaft (9) which projects axially on either side of the gear body (8),
**characterised in that**
the connection between the inner ring (14) of each rolling bearing (11) and the corresponding shaft (9) is designed such that it is spherically mobile, i.e. in the manner of a ball and socket joint (14, 15 ,16).

2. Planetary gear in accordance with claim 1,
**characterised in that**
the inner ring (14) of each rolling bearing (11) is coupled in a positive fit with the gear body (8) of the assigned planet gear (7) via entraining elements (18) such as teeth, pins, grooves and/or holes, for example, which act peripherally, and that the entraining elements (18) are tolerant of load-inducing relative radial movements between the inner ring (14) and the gear body (8) due to defined radial and peripheral play and/or due to elastic deformability.

3. Planetary gear in accordance with claim 1 or 2,
**characterised in that**
the struts (23) connecting the two bearing discs (20) of the planet carrier (19) are coupled with the bearing discs (20) in such a manner that the bearing discs (20) are able to move slightly in relation to one another in their radial planes, in particular are able to rotate slightly peripherally in relation to one another.

4. Planetary gear in accordance with claim 3,
**characterised in that**
the struts (23) are coupled with the bearing discs (20) by positive-fit load transmission elements which permit small pivoting movements about radial axes and by screw connections in such manner that they can be detached.

5. Planetary gear in accordance with claim 4,
**characterised i n that**
the load transmission elements each comprise two integral coaxial pins (24), a separate shaft (30) on each strut (23) and recesses (21) and holes (22) in the bearing discs (20).

6. Planetary gear in accordance with claim 5,
**characterised in that**
the pins (24) and the axle (30) have spherical contact surfaces (26, 31, 32), each pin (24) forms a part of the screw connection and the shaft (30) is hollow in design.

7. Planetary gear in accordance with claim 6,
**characterised in that**
each screw connection has a screw (28), a threaded hole (27) in a pin (24) of a strut (23) and an axially elastically deformable disc (29) designed in the manner of a disc spring.

8. Planetary gear in accordance with one of claims 5 to 7,
**characterised in that**
the pins (24) form the main load transmission elements between the bearing discs (20) and the struts (23) and - the centre points of said pins (24) - viewed axially towards the planet carrier (19) - lie approximately at the point at which two tangents (T1, T2) intersect with the reference circle (38) of the planet gear centre points, the tangents (T1, T2) extending from the centre points of two adjacent planet gears (7).

9. Planetary gear in accordance with one of claims 1 to 8,
**characterised in that**
transmission elements are positioned on at least three and preferably all struts (23) in a plane located axially centrally between the bearing discs (20) to provide support torque on the housing side or to take up power at the planet carrier (19) on the output rotation side.

10. Planetary gear in accordance with claim 9,
**characterised i n that**
the load transmission elements with the struts (23) comprise screwed ball and socket joints (35), the centre points of which are located approximately on the longitudinal centre axes of the pins (24) which are positioned in pairs coaxially opposite one another.

## Revendications

1. Engrenage planétaire (1), en particulier pour la diminution de la vitesse de rotation entre la turbine basse pression et la soufflante d'une turbine à gaz, comportant une roue solaire (3) centrale, trois roues planétaires (7) ou plus, montées dans un plan radial autour de la roue solaire (3) et engrenant avec cette dernière, une roue à denture intérieure (39) entourant les roues planétaires (7) et engrenant avec celles-ci, ainsi qu'un porte-satellites (19) supportant les roues planétaires (7), le mouvement d'entraînement étant assuré par la roue solaire (3), le mouvement de sortie étant effectué par la roue à denture intérieure (39) lorsque le porte-satellites (19) est immobilisé en rotation et par le porte-satellites lorsque la roue à denture intérieure est immobilisée en rotation, sachant que chaque roue planétaire (7) est supportée de part et d'autre, c'est-à-dire dans le sens axial en avant et en arrière du corps de roue (8), respectivement dans un palier à roulements (11), et le porte-satellites (19) comportant deux disques de support (20), situés à distance axiale l'un de l'autre et portant les paliers à roulements (11), ainsi que trois traverses (23) ou plus, reliant les disques de support (20), et chaque palier à roulements (11) est réalisé sous la forme d'un palier à une ou plusieurs rangées de rouleaux cylindriques, et chaque roue planétaire (7) comporte un axe (9) élastique flexible, s'avançant des deux côtés axiaux en saillie au-delà du corps de roue (8), **caractérisé en ce que** la liaison entre la bague intérieure (14) de chaque palier à roulements (11) et l'axe (9) correspondant est réalisée sous forme sphériquement mobile, c'est-à-dire sous forme de joint à rotule (14, 15, 16).

2. Engrenage planétaire selon la revendication 1, **caractérisé en ce que** la bague intérieure (14) de chaque palier à roulements (11) est couplée commande mécanique avec le corps de roue (8) de la roue planétaire (7), chaque palier y est associée par l'intermédiaire d'éléments entraîneurs (18) actifs dans le sens périphérique, tels que des dents, tétons, rainures et/ou alésages, et **en ce que** les éléments entraîneurs (18) sont réalisés avec des tolérances par rapport aux mouvements relatifs radiaux, induits par la charge, entre la bague intérieure (14) et le corps de roue (8), sous l'effet d'un jeu radial et périphérique défini et/ou sous l'effet de la déformabilité élastique.

3. Engrenage planétaire selon la revendication 1 ou 2, **caractérisé en ce que** les traverses (23), qui relient les deux disques de support (20) du porte-satellites (19), sont couplées avec les disques de support (20), de telle sorte que les disques de support (20) sont légèrement mobiles l'un par rapport à l'autre dans leurs plans radiaux, en particulier sont aptes à tourner légèrement l'un par rapport à l'autre dans le sens périphérique.

4. Engrenage planétaire selon la revendication 3, **caractérisé en ce que** les traverses (23) sont couplées de manière amovible avec les disques de support (20) par l'intermédiaire d'éléments de transmission de force commandés mécaniquement, autorisant de petits mouvements de pivotement autour d'axes radiaux, et par l'intermédiaire de raccord à vis.

5. Engrenage planétaire selon la revendication 4, **caractérisé en ce que** les éléments de transmission de force comportent chacun deux tétons (24) coaxiaux intégraux et un arbre (30) séparé sur chaque traverse (23), ainsi que des creux (21) et des alésages (22) sur les disques de support (20).

6. Engrenage planétaire selon la revendication 5, **caractérisé en ce que** les tétons (24) et l'arbre (30) comportent des surfaces de contact (26, 31, 32) bombées, **en ce que** chaque téton (24) forme une partie du raccord à vis, et **en ce que** l'arbre (30) est un arbre creux.

7. Engrenage planétaire selon la revendication 6, **caractérisé en ce que** chaque raccord à vis comporte une vis (28), une forure taraudée (27) dans un téton (24) d'une traverse (23), ainsi qu'une rondelle (29) du type rondelle Belleville, élastiquement déformable dans le sens axial.

8. Engrenage planétaire selon l'une quelconque des revendications 5 à 7, **caractérisé en ce que** les tétons (24) forment les éléments de transmission de force principaux entre les disques de support (20) et les traverses (23) et, en cas d'observation du porte-satellites (19) dans le sens axial, sont en appui avec leurs centres, dans chaque cas, sensiblement dans le point d'intersection de deux tangentes (T1, T2) au cercle partiel (38) passant par les centres des roues planétaires, les tangentes (Tl, T2) partant chacune depuis les centres de deux roues planétaires (7) voisines.

9. Engrenage planétaire selon l'une quelconque des revendications 1 à 8, **caractérisé en ce que** des éléments de transmission de force sont disposés sur au moins trois, de préférence sur toutes, les traverses (23) en vue de supporter le couple de rotation du côté boîtier ou en vue de prélever la puissance du côté actionné sur le porte-satellites (19) dans un plan situé axialement au milieu entre les disques de support (20).

10. Engrenage planétaire selon la revendication 9, **caractérisé en ce que** les éléments de transmission de force comportent des joints à rotule (35), qui sont vissés avec les traverses (23) et dont les centres sont en appui sensiblement sur les axes médians longitudinaux des tétons (24) situés par paires coaxialement face à face.
